# FASCICULE DE BREVET EUROPEEN

(11) **EP 1 508 150 B1**
(45) Date de publication et mention de la délivrance du brevet: **01.12.2010**
(21) Numéro de dépôt: 03755994.5
(22) Date de dépôt: 09.04.2003
(51) Int. Cl.: H01H 83/10

(54) **DISPOSITIF DE PROTECTION CONTRE LES SURTENSIONS**
ÜBERSPANNUNGSSCHUTZEINRICHTUNG
OVERVOLTAGE PROTECTION DEVICE

(30) Priorité: 30.05.2002 FR 0206605
(43) Date de publication de la demande: 23.02.2005
(73) Titulaire: Schneider Electric Industries SAS, 92500 Rueil-Malmaison (FR)
(72) Inventeur: DOMEJEAN, Eric, F-38340 Voreppe (FR); RIVAL, Marc, F-38330 Saint Ismier (FR)
(74) Mandataire: Tripodi, Paul
(86) Numéro de dépôt international: PCT/FR2003/001109
(87) Numéro de publication internationale: WO 2003/102991

(56) Documents cités:
- EP-A- 0 046 545
- EP-A- 0 071 956
- EP-A- 0 860 918
- US-A- 5 281 776

## Description

### DOMAINE TECHNIQUE DE L'INVENTION

L'invention est relative à un appareillage destiné à dévier une onde de courant électrique vers la terre lorsque la tension d'une ligne dépasse un seuil donné.

### ETAT DE LA TECHNIQUE ANTERIEURE

Dans le document EP 0 071 956 est décrit un appareillage électrique pour la protection contre les surtensions, comportant un éclateur, un disjoncteur et, le cas échéant une varistance, connectés en série dans un boîtier commun entre deux bornes, l'une reliée à une ligne d'alimentation, et l'autre reliée à la terre. Le déclencheur électromagnétique du disjoncteur incorpore une fonction retard de plus de 5 millisecondes. En fonctionnement, le disjoncteur et fermé mais l'éclateur est non passant. En cas de surtension, l'éclateur devient passant et permet de dériver vers la terre l'onde de courant correspondante. Si l'éclateur reste passant plus de 5 millisecondes, le disjoncteur déclenche et ouvre le circuit. Un appareillage de ce type est relativement coûteux, puisqu'il nécessite de regrouper plusieurs fonctions sans réelle synergie entre elles. De plus, l'impédance cumulée de l'éclateur, du disjoncteur et du conducteur les reliant est importante, ce qui se traduit par une tension de protection élevée.

### EXPOSE DE L'INVENTION

L'invention vise donc remédier aux inconvénients de l'état de la technique, de manière à proposer un dispositif simple et compact offrant les mêmes fonctions que les associations entre parafoudre à éclateur et disjoncteur de l'état de la technique antérieure.

A cet effet, l'invention a pour objet un dispositif pour la protection contre les surtensions, comportant
- une première électrode,
- une deuxième électrode,
- une première chambre d'extinction d'arc, pourvue de moyens pour dissiper l'énergie produite par un arc tiré entre la première électrode et la deuxième électrode,
**caractérisé en ce que** le dispositif comporte en outre :
- un support mobile solidaire de la deuxième électrode et mobile par rapport à la première électrode entre une position de repos et une position de retrait, la deuxième électrode étant située à une première distance non nulle de la première électrode lorsque le support mobile est en position de repos, et s'éloignant de la première électrode lorsque le support mobile passe de la position de repos à la position de retrait,
- des moyens d'entraînement pour entraîner le support mobile de la position de repos à la position de retrait.

Les électrodes du dispositif cumulent le rôle des électrodes d'un parafoudre, et celui des contacts d'un disjoncteur, ce qui permet de maintenir une impédance aux bornes du dispositif plus faible que dans le cas d'un parafoudre et d'un disjoncteur branchés en série. Les moyens d'entraînement regroupent plusieurs fonctions : ils peuvent contribuer dans certaines circonstances à éteindre un arc électrique engendré par un courant de suite. Ils peuvent également servir au sectionnement du dispositif en fin de vie. Le dispositif obtenu est particulièrement compact.

Avantageusement, le dispositif comporte en outre une butée pour empêcher le support mobile d'entraîner la deuxième électrode à une distance de la première électrode qui soit inférieure à la première distance, et/ou un ressort de rappel pour rappeler le support mobile vers la position de repos. Ces dispositions permettent de contrôler avec précision la distance entre la première et la deuxième électrode dans la position de repos.

Avantageusement, les moyens d'entraînement incluent un mécanisme comportant :
- un accumulateur d'énergie à ressort, mobile entre une position chargée et une position déchargée,
- une chaîne cinématique reliant l'accumulateur à ressort au support mobile, pour entraîner le support mobile de la position de repos à la position de retrait lorsque l'accumulateur d'énergie passe de la position chargée à la position déchargée,
- un verrou pour bloquer l'accumulateur à ressort en position chargée.

Le mécanisme est avantageusement un mécanisme de disjoncteur. On obtient alors les fonctions recherchées avec une grande simplicité, et au moyen d'un mécanisme dont la fiabilité est parfaitement maîtrisée. Préférentiellement, le mécanisme comporte en outre un moyen de déclenchement pour déverrouiller le verrou lorsque le courant traversant la première électrode et la deuxième électrode et/ou la différence de potentiel électrique entre la première électrode et la deuxième électrode remplissent une condition détectée par des moyens de détection.

Avantageusement, les moyens d'entraînement incluent un circuit électromagnétique pour induire sur la deuxième électrode et/ou le support mobile des efforts électromagnétiques tendant à entraîner le support mobile vers la position de retrait, lorsque la deuxième électrode est traversée par un courant. Par ce moyen, on confère une grande rapidité aux moyens d'entraînement, ce qui permet d'assurer une certaine limitation du courant de suite, favorisant son extinction.

On peut également prévoir les moyens d'entraînement incluent un relais électromécanique pourvu d'un percuteur venant percuter le support mobile pour entraîner le support mobile vers la position de retrait, lorsqu'une condition d'ouverture est détectée. Le relais peut être de tout type connu adéquat. Il peut notamment s'agir d'un relais électromagnétique, d'un actionneur piézoélectrique ou d'un actionneur à effet Thomson.

Préférentiellement, le dispositif comporte en outre des moyens d'amorçage pour amorcer un arc électrique entre la première électrode et la deuxième électrode. On peut ainsi contrôler avec précision l'allumage de l'arc électrique, même si le milieu dans lequel baignent les électrodes a une caractéristique diélectrique fluctuante. On n'a donc pas besoin de disposer les électrodes dans une enceinte étanche contenant un gaz dont les caractéristiques diélectriques seraient contrôlées avec précision. selon un mode de réalisation, les moyens d'amorçage comportent :
- un circuit de détection pour détecter une différence de potentiel électrique entre la première électrode et la deuxième électrode et
- un circuit d'amorçage pour amorcer un arc entre l'électrode fixe et l'électrode mobile lorsque la différence de potentiel électrique entre la première et la deuxième électrode remplit une condition prédéterminée.

Pour obtenir un circuit d'amorçage particulièrement simple et compact, celui-ci comporte :
- une électrode d'amorçage d'un arc électrique entre la première électrode et la deuxième électrode,
- un circuit pour générer une tension d'amorçage entre l'électrode d'amorçage et l'une des première et deuxième électrodes.

Avantageusement, les moyens d'entraînement comportent des moyens de réinitialisation pour entraîner le support mobile de la position de la position de retrait à la position de repos. On obtient ainsi un appareil permettant un réamorçage. Le retour à la position de repos peut se faire manuellement, l'énergie étant fournie par un opérateur agissant sur une poignée ou bien automatiquement, par l'intermédiaire d'un moteur. Selon un mode de réalisation, les moyens de réinitialisation comportent un ressort de rappel pour rappeler le support mobile vers la position de repos. Le ressort de rappel peut être distinct du ressort de l'accumulateur à ressort. Il peut être également confondu avec ce dernier, dans un mécanisme du type Tumbler.

Avantageusement, le dispositif comporte en outre des moyens de visualisation pour indiquer que le support mobile se trouve en position de retrait. Si l'appareil est pourvu d'une manette associée au mécanisme, cette dernière peut faire office de moyen de visualisation.

Avantageusement, le dispositif il comporte en outre une paire de plages de raccordement pour raccorder le dispositif à une ligne électrique et à la terre, la paire de plage de raccordement étant composée d'une première plage de raccordement en liaison électrique permanente avec la première électrode, et d'une deuxième plage de raccordement en liaison électrique avec la deuxième électrode au moins lorsque le support mobile est en position de repos.

Selon un mode de réalisation, la deuxième électrode est en liaison électrique permanente avec la deuxième plage de raccordement.

Pour améliorer la maîtrise de la phase d'allumage, on peut prévoir :
- une troisième électrode fixe disposée entre la première électrode et la deuxième électrode, à une distance fixe de la première électrode,
- une quatrième électrode fixe disposée entre la troisième électrode et la deuxième électrode, la quatrième électrode étant en liaison électrique permanente avec la troisième électrode, la deuxième électrode en position de repos étant en contact avec la quatrième électrode, la deuxième électrode en position de retrait étant séparée de la quatrième électrode, la chambre d'extinction d'arc étant pourvue de moyens pour dissiper l'énergie produite par un arc tiré entre la troisième électrode et la première électrode.

Un tel mode de réalisation s'avère particulièrement adapté à des installations de faible puissance.

Alternativement, on peut prévoir, notamment pour des installations de plus grande puissance :
- une troisième électrode,
- une quatrième électrode solidaire du support mobile et en liaison électrique permanent avec la deuxième électrode, la quatrième électrode étant dans une position de contact avec la troisième électrode lorsque le support mobile est dans la position de repos, et dans une position de séparation, à distance de la troisième électrode lorsque le support mobile est dans la position de retrait,
- une deuxième chambre d'extinction d'arc, pourvue de moyens pour dissiper l'énergie produite par un arc tiré entre la troisième électrode et la quatrième électrode.

Plus précisément, le dispositif peut comporter :
- une paire de plages de raccordement pour raccorder le dispositif à une ligne électrique et à la terre, la paire de plage de raccordement étant composée d'une première plage de raccordement en liaison électrique permanente avec la première électrode qui est fixe, et d'une deuxième plage de raccordement en liaison électrique avec la deuxième électrode au moins lorsque le support mobile est en position de repos,
- une troisième électrode, fixe et en liaison électrique permanente avec la deuxième plage de raccordement,
- une quatrième électrode solidaire du support mobile et en liaison électrique permanent avec la deuxième électrode, la quatrième électrode étant dans une position de contact avec la troisième électrode lorsque le support mobile est dans la position de repos, et dans une position de séparation, à distance de la troisième électrode lorsque le support mobile est dans la position de retrait,
- une deuxième chambre d'extinction d'arc, pourvue de moyens pour dissiper l'énergie produite par un arc tiré entre la troisième électrode et la quatrième électrode.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente un dis positif selon un premier mode de réalisation, en position initiale;
- la figure 2 représente le dispositif de la figure 1, dans une position de répulsion;
- la figure 3 représente le dispositif de la figure 1, dans une position déclenchée;
- la figure 4 représente un schéma électrique du dispositif de la figure 1, inséré dans un circuit électrique de protection contre les surtensions;
- la figure 5 représente un dispositif selon un deuxième mode de réalisation, en position initiale;
- la figure 6 représente le dispositif de la figure 5, en position de retrait.

### DESCRIPTION DETAILLEE D'UN MODE DE REALISATION

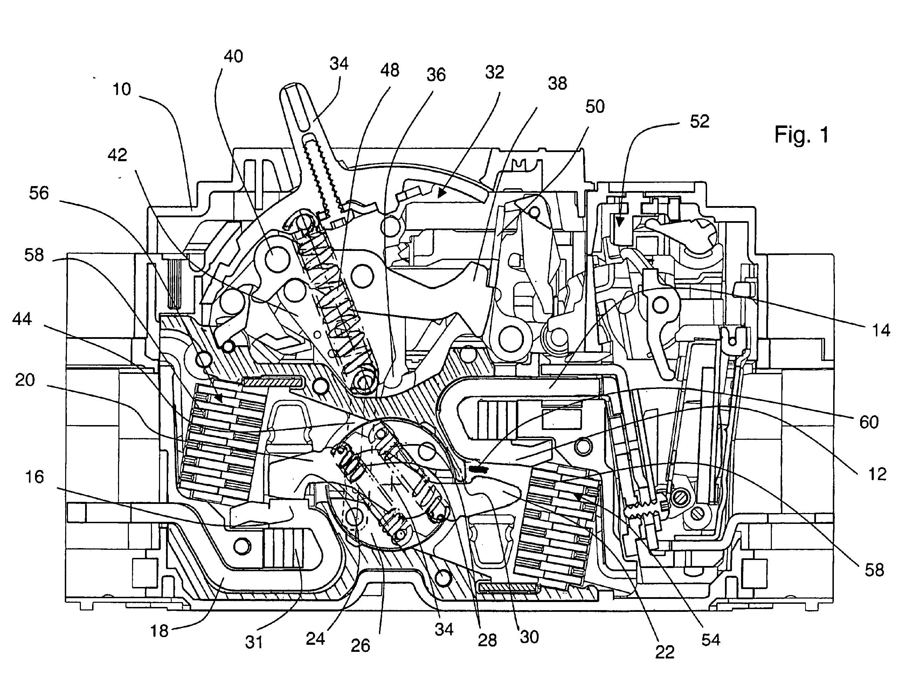

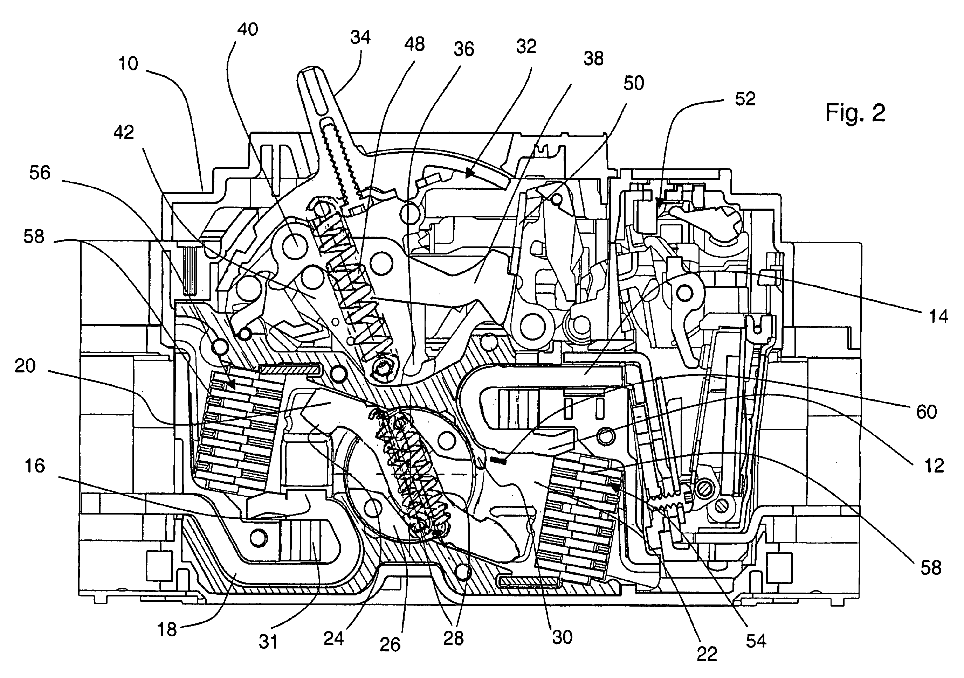

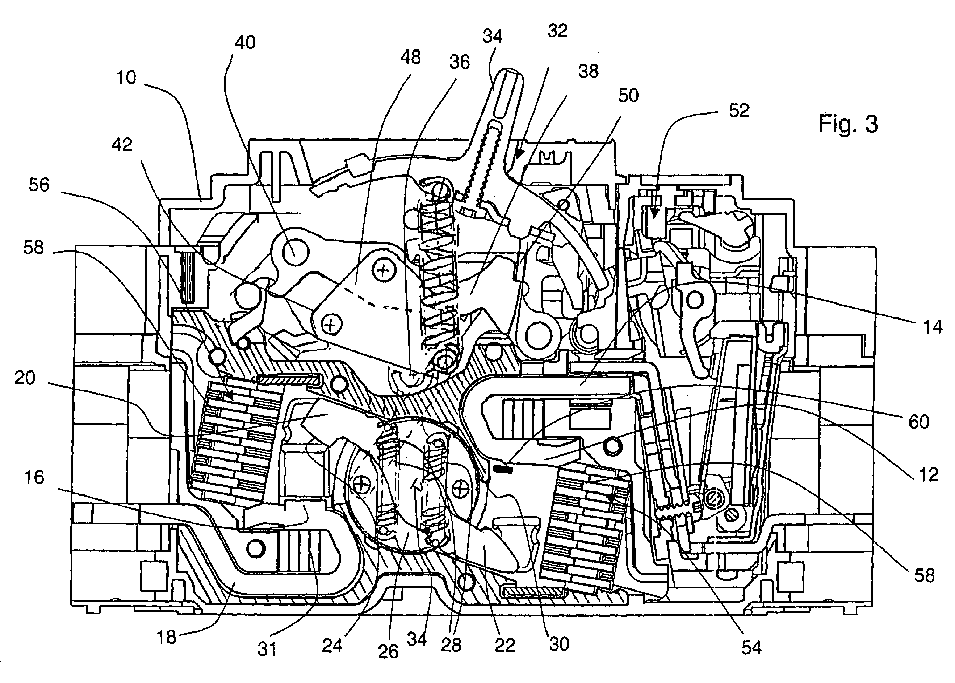

En référence aux figures 1 à 3, un dispositif selon un premier mode de réalisation de l'invention comporte, à l'intérieur d'un boîtier en matière synthétique isolante 10, une électrode fixe 12 reliée à une plage de raccordement 14, un contact fixe 16 relié à une autre plage de raccordement 18, et un pont métallique 20 comportant à l'une de ses extrémités une électrode mobile 22 disposée en regard de l'électrode fixe 12 et, à l'extrémité opposée, un contact mobile 24 disposé en regard du contact fixe 16. Le pont 20 est monté sur un arbre 26 par l'intermédiaire de ressorts de rappel 28, qui tendent à rappeler le pont 20 dans le sens rapprochant le contact mobile 24 du contact fixe 16. Le pont 20 est susceptible de se déplacer, par rapport à l'arbre 26, de la position de repos représentée sur la figure 1 à la position de retrait représentée sur la figure 2. Une butée 30 solidaire du boîtier et sur laquelle bute le pont 20, interdit tout rapprochement entre les électrodes en deçà de la position de repos. Les plages de raccordement 14 et 18 ont une conformation en C qui concentre les lignes de champs induites par lorsqu'un courant les traverse. Par ailleurs, la plage 18 encercle un circuit magnétique 31 en U qui concentre encore les lignes de champ dans la zone des contacts 16, 24. L'arbre 26 est entraîné par un mécanisme 32 et pivote autour d'un axe géométrique imaginaire 34 perpendiculaire au plan des figures, entre la position fermée représentée sur la figure 1 et la position de sectionnement représentée sur la figure 3. Il s'agit là d'un mécanisme de disjoncteur à double coupure de type connu, et décrit plus en détail par exemple dans le document FR 2 684 249. Ce mécanisme comporte une poignée 34 pivotant autour d'un axe fixe 36, un crochet 38 pivotant autour d'un axe fixe 40, une première bielle 42 articulée sur le crochet 38, une deuxième bielle 44 articulée sur la première bielle 42 et sur l'arbre 26, un ressort de traction 48 tendu entre la poignée 34 et l'articulation de l'embiellage 42, 44, et un verrou 50 pour accrocher le crochet 38 dans la position de la figure 1. Le verrou est piloté par un relais électromécanique 52.

Une chambre d'extinction d'arc 54 est disposée en regard des électrodes 12, 22, et une autre chambre 56 en regard des contacts. Chaque chambre 54, 56 est pourvue d'ailettes de refroidissement 58 destinées à refroidir et déioniser l'arc électrique.

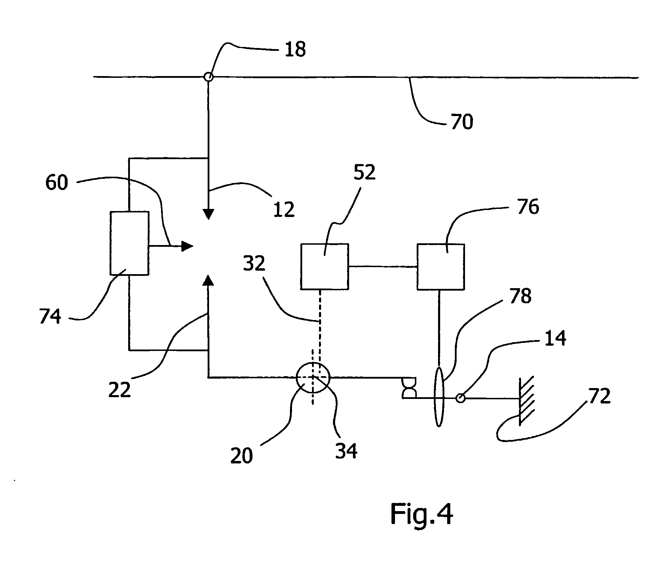

Comme représenté schématiquement sur la figure 4, le dispositif est branché par l'une de ses plages de raccordement à une ligne électrique 70, et par l'autre plage de raccordement à la terre 72, sans qu'un sens de raccordement soit prescrit. Une électrode d'amorçage 60 est disposée entre les deux électrodes 12, 22. L'électrode d'amorçage 60 est commandée par un circuit électrique d'amorçage 74 branché entre le pont et l'électrode fixe. Le circuit électrique d'amorçage 74 détecte la différence de potentiel électrique entre l'électrode mobile 22 et de l'électrode fixe 12. Un déclencheur 76 détecte l'intensité du courant s'écoulant vers la terre par l'intermédiaire d'un tore de mesure, et pilote le relais électromécanique 52. Au déclencheur est associé par ailleurs un système de détection, d'enregistrement et de transmission d'informations caractéristique des surtensions aux bornes du dispositif et des courants traversant le dispositif, et notamment sur le nombre de coups de foudre, la valeur maximale des chocs de foudre enregistrés et la durée des chocs de foudre.

Le dispositif fonctionne de la manière suivante:

En temps normal, le dispositif se trouve dans la position de repos représentée sur la figure 1. Le circuit entre les plages de raccordement 14, 18 est ouvert du fait de la distance de garde existant entre les électrodes 12, 22. Lorsqu'une surtension apparaît sur la ligne, par exemple une surtension due à la foudre, une différence de potentiel est détectée par le circuit d'amorçage 74. Si cette différence de potentiel dépasse un seuil donné, le circuit d'amorçage 74 porte l'électrode d'amorçage 60 à un potentiel suffisant pour faire éclater un arc entre les électrodes 12, 22. Cet arc ferme le circuit électrique entre les plages de raccordement 14, 18 sans qu'il y ait mouvement du pont 20, et permet l'écoulement de l'onde de courant vers la terre. Du fait de la conformation en C de la plage de raccordement 14, l'arc électrique est projeté vers la chambre d'extinction d'arc 54, qui absorbe une partie de l'énergie émise par l'arc électrique, fait monter la tension d'arc et permet l'extinction de l'arc.

Si toutefois l'intensité du courant d'arc est très importante, la plage de raccordement 14 et de la plage de raccordement 18, renforcées par le circuit magnétique 31, produisent sur le pont de contact 20 des forces électromagnétiques répulsives suffisantes pour provoquer un pivotement du pont de contact 20, contre la sollicitation des ressorts de rappel 28, sans mouvement de l'arbre 26, jusqu'à atteindre la position de la figure 2. Ce mouvement provoque la séparation entre le contact mobile 24 et le contact fixe 16. Un arc électrique secondaire naît entre les contacts 16, 24. Cet arc électrique secondaire est projeté vers la chambre d'extinction 56 par l'effet des forces électromagnétiques engendrées par la conformation en C de la plage de raccordement 18. Les deux arcs en séries s'allongent d'autant plus que le pont 20 s'approche de la position de retrait du fait de l'éloignement croissant entre les électrodes 12, 22, et entre les contacts 16, 24. La tension entre les plages de raccordement 14, 18 lors du passage de l'onde de courant initiale est telle qu'il n'y a pas d'effet de limitation de l'onde initiale. Par contre, la tension d'arc cumulée par les deux arcs en série est suffisante pour que limiter fortement, voire totalement éliminer le courant de suite. Les arcs s'éteignent et le dispositif se régénère dès que l'onde de courant est passée.

Si toutefois l'arc électrique entre les électrodes perdure au-delà d'une durée prédéterminée, le déclencheur 76 détecte ce dysfonctionnement et commande l'ouverture du mécanisme 32 qui entraîne l'arbre et le pont dans la position de la figure 3. Dans cette position, le sectionnement entre la ligne et la terre est assuré par les distances cumulées dans l'air entre le pont 20 et l'électrode fixe 12 d'une part, et entre le pont 20 et le contact fixe 16 d'autre part. L'état sectionné est visualisé par la poignée 34 et/ou par tout voyant ou indicateur approprié. Le déclenchement du mécanisme est donc provoqué dans des conditions exceptionnelles, garantissant une sélectivité dans les moyens de coupure du circuit établi entre la ligne et la terre.

Le mécanisme dispose également d'un déclencheur thermique assurant le déclenchement long retard. Ainsi, si un dysfonctionnement intervient entre les électrodes, provoquant un arc électrique intempestif établissant le courant entre la ligne et la terre, le mécanisme s'ouvre et assure le sectionnement entre la ligne et la terre.

Le cas échéant, il est possible de refermer le mécanisme à l'aide de la poignée, pour retourner dans l'état de repos de la figure 1. Après une opération de maintenance, il est donc possible de ré-enclencher le mécanisme.

Diverses variantes sont envisageables. En particulier, la butée 30 qui garantit la distance entre l'électrode mobile et l'électrode fixe, peut être placée à tout endroit lui permettant de remplir sa fonction. Le mécanisme d'entraînement peut être notamment de tout type connu pour l'entraînement des contacts de disjoncteurs. Il peut notamment inclure un ressort de fermeture et un ressort d'ouverture distincts. L'électrode mobile peut être le cas échéant entraîné en translation plutôt qu'en rotation.

La répulsion électromagnétique est optionnelle. On peut en effet passer directement d'une phase d'écoulement du courant sans mouvement des électrodes à une phase d'ouverture des électrodes par le mécanisme.

Selon une variante non représentée, il est également possible de concevoir un dispositif symétrique par rapport à l'axe géométrique de rotation 34, dans lequel la paire de contacts 16, 24 serait remplacée par une paire d'électrodes identiques aux électrodes 12 et 20, entre lesquelles serait disposée une électrode d'amorçage identique à l'électrode 60.

Il est également possible de transposer le principe exposé à une structure à simple coupure, ne comportant pas de paire de contacts, mais uniquement une électrode fixe et une électrode mobile, disposée en regard d'une chambre de coupure unique.

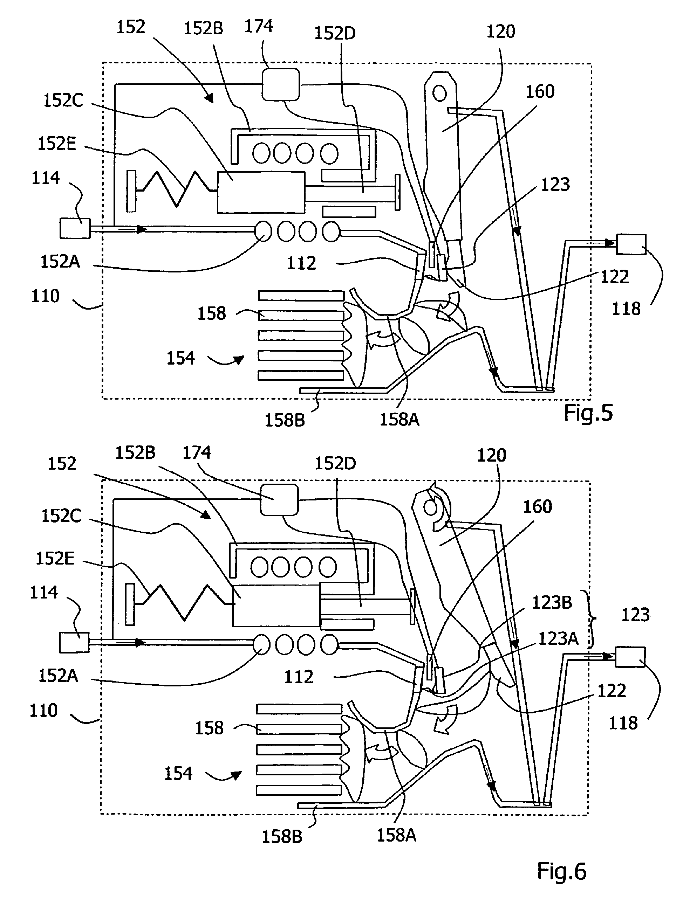

En référence aux figures 5 et 6, un dispositif selon un deuxième mode de réalisation de l'invention comporte, logées dans un boîtier en matériau isolant 110, une électrode fixe 112 reliée à une plage de raccordement 114, une électrode mobile 122 supportée par un bras 120 pivotant autour d'un axe fixe et reliée à une plage de raccordement 118, et une pastille fixe conductrice 123 présentant une face constituant une électrode fixe 123A (figure 6) en regard de l'électrode 112 et une face opposée 123B (figure 6) constituant une électrode de contact sur laquelle repose l'électrode mobile 122 de contact. Les électrodes sont disposées en regard d'une chambre de coupure 154 munie d'ailettes de refroidissement 158. La chambre 154 est pourvue d'une corne d'arc inférieure 158A reliée électriquement à l'électrode fixe 112 et d'une corne d'arc supérieure 158B reliée à la plage de raccordement 118.

Entre l'électrode fixe et la pastille est disposée une électrode d'amorçage 160, commandée par un circuit d'amorçage 174 détectant une différence de potentiel entre la plage de raccordement 114 et la pastille 123. Un relais électromécanique 152 est disposé en face du bras pivotant. Le relais comporte un bobinage 152A branché en série entre la plage de raccordement 114 et l'électrode fixe 112, une culasse 152B formant un circuit magnétique, une armature mobile 152C prolongée par un percuteur 152D et un ressort de rappel 152E de l'armature vers une position de repos par un ressort, vers la gauche sur les figures 5 et 6.

En fonctionnement, l'une des plages de raccordement 114, 118 est reliée à une ligne électrique et l'autre à la terre. Le dispositif est non passant puisque l'électrode fixe 112 est disposée à distance de l'électrode 123A de la pastille 123. Si la différence de potentiel entre l'électrode fixe 112 et la pastille 123 dépasse un seuil prédéterminé, l'électrode d'amorçage 160 est portée par le circuit d'amorçage 174 à une tension telle qu'un arc est amorcé entre l'électrode d'amorçage et l'une des électrodes. Cet arc s'établi aussitôt entre l'électrode fixe 112 et la pastille 123, et le courant électrique trouve un chemin entre les plages de raccordement, passant par l'électrode fixe 112, la pastille 123, l'électrode mobile 122 et le bras 120 en position de repos. La forme en boucle de l'électrode 112 induit sur l'arc des efforts électromagnétique propulsant l'arc vers la chambre. De ce fait, l'arc commute sur les cornes d'arc 158A, 158B et s'enfonce dans la chambre pour s'y éteindre à la fin de l'onde de courant. L'extinction de l'arc ouvre le circuit et la ligne se retrouve isolée de la terre. La durée totale de la vie de l'arc, de quelques dizaines de microsecondes, est suffisamment faible pour que le relais n'intervienne pas, du fait de son inertie.

Dans certaines circonstances toutefois, un arc électrique peut perdurer entre l'électrode 112 et la pastille 123, soit du fait d'un courant de suite, soit du fait d'une dégradation des électrodes dans le temps. Dans un pareil cas, le relais électromécanique est alimenté suffisamment longtemps pour entraîner l'équipage mobile 152C font l'extrémité 152D vient percuter le bras 120 et le projeter en position de retrait, comme représenté sur la figure 6. L'arc commute alors entre l'électrode fixe et l'électrode mobile et s'allonge jusqu'à pénétrer dans la chambre pour s'y éteindre. Un accrochage peut être prévu pour empêcher la retombée du bras 120. Un mécanisme de réarmement peut être prévu pour permettre le retour du bras en position de repos.

Naturellement, diverses modifications sont possibles.

Dans le deuxième mode de réalisation, il n'est pas nécessaire que la corne d'arc supérieure soit reliée électriquement à la plage de raccordement. Par ailleurs, on peut également prévoir pour le deuxième mode de réalisation un dispositif assurant une pression de contact.

L'amorçage est optionnel. L'amorçage peut se faire par tout moyen approprié. Il peut notamment être obtenu par l'intermédiaire d'un couple d'électrodes d'amorçage permettant d'ioniser le gaz entre l'électrode fixe et l'électrode mobile.

## Revendications

1. Dispositif pour la protection contre les surtensions, comportant
- une première électrode (12, 112),
- une deuxième électrode (22, 122),
- une première chambre d'extinction d'arc (54, 154), pourvue de moyens (58, 158) pour dissiper l'énergie produite par un arc tiré entre la première électrode (12, 112) et la deuxième électrode (22, 122),
**caractérisé en ce que** le dispositif comporte en outre :
- un support mobile (20, 120) solidaire de la deuxième électrode (22, 122) et mobile par rapport à la première électrode (12, 112) entre une position de repos et une position de retrait, la deuxième électrode (22, 122) étant située à une première distance non nulle de la première électrode lorsque le support mobile est en position de repos, et s'éloignant de la première électrode lorsque le support mobile passe de la position de repos à la position de retrait,
- des moyens d'entraînement (32, 152) pour entraîner le support mobile de la position de repos à la position de retrait.

2. Dispositif selon la revendication 1, **caractérisé en ce qu'**il comporte en outre :
- une butée (30, 123) pour empêcher le support mobile d'entraîner la deuxième électrode à une distance de la première électrode qui soit inférieure à la première distance.

3. Dispositif selon l'une quelconque des revendications 1 ou 2, **caractérisé en ce qu'**il comporte en outre :
- un ressort de rappel (28) pour rappeler le support mobile vers la position de repos.

4. Dispositif selon l'une quelconque des revendications précédentes, **caractérisé en ce que** les moyens d'entraînement incluent un mécanisme comportant :
- un accumulateur d'énergie à ressort (48), mobile entre une position chargée et une position déchargée,
- une chaîne cinématique reliant l'accumulateur à ressort au support mobile, pour entraîner le support mobile de la position de repos à la position de retrait lorsque l'accumulateur d'énergie passe de la position chargée à la position déchargée,
- un verrou (50) pour bloquer l'accumulateur à ressort en position chargée.

5. Dispositif selon la revendication 4, **caractérisé en ce que** le mécanisme comporte en outre :
- un moyen de déclenchement (52) pour déverrouiller le verrou lorsque le courant traversant la première électrode et la deuxième électrode et/ou la différence de potentiel électrique entre la première électrode et la deuxième électrode remplissent une condition détectée par des moyens de détection (174).

6. Dispositif selon l'une quelconque des revendications précédentes, **caractérisé en ce que** les moyens d'entraînement incluent un circuit électromagnétique (14, 18, 31) pour induire sur la deuxième électrode (22) et/ou le support mobile (20) des efforts électromagnétiques tendant à entraîner le support mobile (20) vers la position de retrait, lorsque la deuxième électrode est traversée par un courant.

7. Dispositif selon l'une quelconque des revendications précédentes, **caractérisé en ce que** les moyens d'entraînement incluent un relais électromécanique (152) pourvu d'un percuteur (152D) venant percuter le support mobile pour entraîner le support mobile vers la position de retrait, lorsqu'une condition d'ouverture est détectée.

8. Dispositif selon l'une quelconque des revendications précédentes, **caractérisé en ce qu'**il comporte en outre :
- des moyens d'amorçage (60) pour amorcer un arc électrique entre la première électrode et la deuxième électrode.

9. Dispositif selon la revendication 8, **caractérisé en ce que** les moyens d'amorçage comportent :
- un circuit de détection (74, 174) pour détecter une différence de potentiel électrique entre la première électrode et la deuxième électrode et
- un circuit d'amorçage pour amorcer un arc entre l'électrode fixe et l'électrode mobile lorsque la différence de potentiel électrique entre la première et la deuxième électrode remplit une condition prédéterminée.

10. Dispositif selon la revendication 9, **caractérisé en ce que** le circuit d'amorçage comporte :
- une électrode d'amorçage (60, 160) d'un arc électrique entre la première électrode et la deuxième électrode,
- un circuit (74, 174) pour générer une tension d'amorçage entre l'électrode d'amorçage et l'une des première et deuxième électrodes.

11. Dispositif selon l'une quelconque des revendications précédentes, **caractérisé en ce que** les moyens d'entraînement comportent des moyens de réinitialisation (34) pour entraîner le support mobile de la position de la position de retrait à la position de repos.

12. Dispositif selon l'une quelconque la revendication 11, **caractérisé en ce que** les moyens de réinitialisation comportent un ressort de rappel (28) pour rappeler le support mobile vers la position de repos.

13. Dispositif selon l'une quelconque des revendications précédentes, **caractérisé en ce qu'**il comporte en outre des moyens de visualisation (34) pour indiquer que le support mobile se trouve en position de retrait.

14. Dispositif selon l'une quelconque des revendications précédentes, **caractérisé en ce qu'**il comporte en outre :
- une paire de plages de raccordement pour raccorder le dispositif à une ligne électrique et à la terre, la paire de plage de raccordement étant composée d'une première plage de raccordement (14) en liaison électrique permanente avec la première électrode, et d'une deuxième plage de raccordement (18) en liaison électrique avec la deuxième électrode au moins lorsque le support mobile est en position de repos.

15. Dispositif selon la revendication 14, **caractérisé en ce que** la deuxième électrode est en liaison électrique permanente avec la deuxième plage de raccordement.

16. Dispositif selon l'une quelconque des revendications précédentes, **caractérisé en ce qu'**il comporte en outre :
- une troisième électrode fixe (123A) disposée entre la première électrode et la deuxième électrode, à une distance fixe de la première électrode,
- une quatrième électrode fixe (123B) disposée entre la troisième électrode et la deuxième électrode, la quatrième électrode étant en liaison électrique permanente avec la troisième électrode, la deuxième électrode en position de repos étant en contact avec la quatrième électrode, la deuxième électrode en position de retrait étant séparée de la quatrième électrode, la chambre d'extinction d'arc étant pourvue de moyens (158) pour dissiper l'énergie produite par un arc tiré entre la troisième électrode et la première électrode.

17. Dispositif selon l'une quelconque des revendications 1 à 13, **caractérisé en ce qu'**il comporte en outre :
- une troisième électrode (16),
- une quatrième électrode (24) solidaire du support mobile et en liaison électrique permanent avec la deuxième électrode (22), la quatrième électrode étant dans une position de contact avec la troisième électrode lorsque le support mobile est dans la position de repos, et dans une position de séparation, à distance de la troisième électrode lorsque le support mobile est dans la position de retrait,
- une deuxième chambre d'extinction d'arc (56), pourvue de moyens (58) pour dissiper l'énergie produite par un arc tiré entre la troisième électrode et la quatrième électrode.

18. Dispositif selon l'une quelconque des revendications 1 à 13, **caractérisé en ce qu'**il comporte en outre :
- une paire de plages de raccordement pour raccorder le dispositif à une ligne électrique et à la terre, la paire de plage de raccordement étant composée d'une première plage de raccordement (14) en liaison électrique permanente avec la première électrode (12) qui est fixe, et d'une deuxième plage de raccordement (18) en liaison électrique avec la deuxième électrode (22) au moins lorsque le support mobile (20) est en position de repos,
- une troisième électrode (16), fixe et en liaison électrique permanente avec la deuxième plage de raccordement (18),
- une quatrième électrode (24) solidaire du support mobile et en liaison électrique permanent avec la deuxième électrode, la quatrième électrode étant dans une position de contact avec la troisième électrode lorsque le support mobile est dans la position de repos, et dans une position de séparation, à distance de la troisième électrode lorsque le support mobile est dans la position de retrait,
- une deuxième chambre d'extinction d'arc (56), pourvue de moyens (58) pour dissiper l'énergie produite par un arc tiré entre la troisième électrode et la quatrième électrode.

## Claims

1. Device for protection against voltage surges, comprising
- a first electrode (12, 112),
- a second electrode (22, 122),
- a first arc extinguishing chamber (54, 154) equipped with means (58, 158) for dissipating the energy produced by an arc drawn between the first electrode (12, 112) and the second electrode (22, 122),
**characterized in that** the device further comprises:
- a movable support (20, 120) fixedly secured to the second electrode (22, 122) and movable with respect to the first electrode (12, 112) between a rest position and a withdrawn position, the second electrode (22, 122) being situated at a first non-nil distance from the first electrode when the movable support is in the rest position, and moving away from the first electrode when the movable support moves from the rest position to the withdrawn position,
- drive means (32, 152) to drive the movable support from the rest position to the withdrawn position.

2. Device according to claim 1, **characterized in that** it further comprises:
- a stop (30, 123) to prevent the movable support from driving the second electrode to a distance from the first electrode that is smaller than the first distance.

3. Device according to either one of claims 1 or 2, **characterized in that** it further comprises:
- a return spring (28) to return the movable support to the rest position.

4. Device according to any one of the foregoing claims, **characterized in that** the drive means include a mechanism comprising:
- an energy storage device with a spring (48) movable between a loaded position and a relaxed position,
- a kinematic linkage connecting the energy storage device to the movable support to drive the movable support from the rest position to the withdrawn position when the energy storage device moves from the loaded position to the relaxed position,
- a latch (50) to latch the energy storage device in the loaded position.

5. Device according to claim 4, **characterized in that** the mechanism further comprises:
- trip means (52) to unlatch the latch when the current flowing through the first electrode and the second electrode and/or the electrical potential difference between the first electrode and the second electrode fulfil a condition detected by detection means (174).

6. Device according to any one of the foregoing claims, **characterized in that** the drive means include an electromagnetic circuit (14, 18, 31) to induce electromagnetic forces on the second electrode (22) and/or the movable support (20) tending to drive the movable support (20) to the withdrawn position when a current is flowing in the second electrode.

7. Device according to any one of the foregoing claims, **characterized in that** the drive means include an electromechanical relay (152) equipped with a striker (152D) that strikes the movable support to drive the movable support to the withdrawn position when an opening condition is detected.

8. Device according to any one of the foregoing claims, **characterized in that** it further comprises:
- striking means (60) to ignite an electric arc between the first electrode and the second electrode.

9. Device according to claim 8, **characterized in that** the striking means comprise:
- a detection circuit (74, 174) to detect an electrical potential difference between the first electrode and the second electrode and
- a striking circuit to ignite an arc between the stationary electrode and the movable electrode when the electrical potential difference between the first electrode and the second electrode fulfils a preset condition.

10. Device according to claim 9, **characterized in that** the striking circuit comprises:
- a starting electrode (60, 160) to ignite an electric arc between the first electrode and the second electrode,
- a circuit (74, 174) to generate a spark-over voltage between the starting electrode and one of the first and second electrodes.

11. Device according to any one of the foregoing claims, **characterized in that** the drive means comprise reinitialization means (34) to drive the movable support from the withdrawn position to the rest position.

12. Device according to claim 11, **characterized in that** the reinitialization means comprise a return spring (28) to return the movable support to the rest position.

13. Device according to any one of the foregoing claims, **characterized in that** it further comprises display means (34) to indicate that the movable support is in the withdrawn position.

14. Device according to any one of the foregoing claims, **characterized in that** it further comprises:
- a pair of connecting strips to connect the device to an electric line and to earth, the pair of connecting strips being composed of a first connecting strip (14) in permanent electrical connection with the first electrode, and a second connecting strip (18) in electrical connection with the second electrode at least when the movable support is in the rest position.

15. Device according to claim 14, **characterized in that** the second electrode is in permanent electrical connection with the second connecting strip.

16. Device according to any one of the foregoing claims, **characterized in that** it further comprises:
- a third stationary electrode (123A) arranged between the first electrode and the second electrode, at a fixed distance from the first electrode,
- a fourth stationary electrode (123B) arranged between the third electrode and the second electrode, the fourth electrode being in permanent electrical connection with the third electrode, the second electrode in the rest position being in contact with the fourth electrode, the second electrode in the withdrawn position being separated from the fourth electrode, the arc extinguishing chamber being provided with means (158) for dissipating the energy produced by an arc drawn between the third electrode and the first electrode.

17. Device according to any one of claims 1 to 13, **characterized in that** it further comprises:
- a third electrode (16),
- a fourth electrode (24) fixedly secured to the movable support and in permanent electrical connection with the second electrode (22), the fourth electrode being in a contact position with the third electrode when the movable support is in the rest position, and in a separated position, at a distance from the third electrode, when the movable support is in the withdrawn position,
- a second arc extinguishing chamber (56) provided with means (58) for dissipating the energy produced by an arc drawn between the third electrode and the fourth electrode.

18. Device according to any one of claims 1 to 13, **characterized in that** it further comprises:
- a pair of connecting strips to connect the device to an electric line and to earth, the pair of connecting strips being composed of a first connecting strip (14) in permanent electrical connection with the first electrode (12) which is stationary, and a second connecting strip (18) in electrical connection with the second electrode (22) at least when the movable support (20) is in the rest position,
- a third, stationary, electrode (16) in permanent electrical connection with the second connecting strip (18),
- a fourth electrode (24) fixedly secured to the movable support mobile and in permanent electrical connection with the second electrode, the fourth electrode being in a contact position with the third electrode when the movable support is in the rest position, and in a separated position, at a distance from the third electrode, when the movable support is in the withdrawn position,
- a second arc extinguishing chamber (56) provided with means (58) for dissipating the energy produced by an arc drawn between the third electrode and the fourth electrode.

## Patentansprüche

1. Überspannungs-Schutzeinrichtung mit
- einer ersten Elektrode (12, 112),
- einer zweiten Elektrode (22, 122),
- und einer ersten Lichtbogenlöschkammer (54, 154) mit Mitteln (58, 158) zur Abführung der Energie, die durch einen zwischen der ersten Elektrode (12, 112) und der zweiten Elektrode (22, 122) gezogenen Lichtbogen erzeugt wird,
**dadurch gekennzeichnet, dass** die Einrichtung darüber hinaus
- einen bewegliche Träger (20, 120), der fest mit der zweiten Elektrode (22, 122) verbunden ist und in Bezug zur ersten Elektrode (12, 112) zwischen einer Ruhestellung und einer Rückzugsstellung verschoben werden kann, wobei die zweite Elektrode (22, 122) in der Ruhestellung des beweglichen Trägers in einem ersten Abstand ungleich null von der ersten Elektrode angeordnet ist und sich von der ersten Elektrode zurückzieht, wenn der bewegliche Träger von der Ruhestellung in die Rückzugsstellung übergeht,
- sowie Antriebsmittel (32, 152) umfasst, um den beweglichen Träger von der Ruhestellung in die Rückzugsstellung zu verbringen.

2. Einrichtung nach Anspruch 1, **dadurch gekennzeichnet, dass** sie darüber hinaus
- einen Anschlag (30, 123) umfasst, um den beweglichen Träger daran zu hindern, die zweite Elektrode in eine Stellung zu verbringen, in der der Abstand zur ersten Elektrode kleiner ist als der erste Abstand.

3. Einrichtung nach irgendeinem der Ansprüche 1 oder 2, **dadurch gekennzeichnet, dass** sie darüber hinaus
- eine Rückholfeder (28) umfasst, um den beweglichen Träger in Richtung der Ruhestellung zu beaufschlagen.

4. Einrichtung nach irgendeinem der vorhergehenden Ansprüche, **dadurch gekennzeichnet, dass** die Antriebsmittel einen Schaltmechanismus mit
- einem Federkraftspeicher (48), der sich zwischen einer Gespanntstellung und einer Entspanntstellung bewegen kann,
- einer kinematischen Kette, die den Federkraftspeicher mit dem beweglichen Träger verbindet, um den beweglichen Träger von der Ruhestellung in die Rückzugsstellung zu verbringen, wenn der Federkraftspeicher von der Gespanntstellung in die Entspanntstellung übergeht,
- sowie eine Verriegelung (50) umfasst, um den Federkraftspeicher in der Gespanntstellung zu blockieren.

5. Einrichtung nach Anspruch 4, **dadurch gekennzeichnet, dass** der Schaltmechanismus
darüber hinaus
- eine Auslöseeinrichtung (52) umfasst, um die Verriegelung zu lösen, wenn der über die erste und die zweite Elektrode fließende Strom und/oder die Potentialdifferenz zwischen der ersten und der zweiten Elektrode eine von den Detektionsmitteln (174) erkannte Bedingung erfüllt.

6. Einrichtung nach irgendeinem der vorhergehenden Ansprüche, **dadurch gekennzeichnet, dass** die Antriebsmittel einen elektromagnetischen Stromkreis (14, 18, 31) umfassen, der dazu dient, auf die zweite Elektrode (22) und/oder den beweglichen Träger (20) wirkende elektromagnetische Kräfte zu erzeugen, die bestrebt sind, den beweglichen Träger (20) in die Rückzugsstellung zu verbringen, wenn die zweite Elektrode von einem Strom durchflossen wird.

7. Einrichtung nach irgendeinem der vorhergehenden Ansprüche, **dadurch gekennzeichnet, dass** die Antriebsmittel ein elektromagnetisches Relais (152) mit einem Schlagstift (152D) umfassen, der auf den beweglichen Träger wirkt, um den beweglichen Träger in die Rückzugsstellung zu verbringen, wenn eine Abschaltbedingung erfasst wird.

8. Einrichtung nach irgendeinem der vorhergehenden Ansprüche, **dadurch gekennzeichnet, dass** sie darüber hinaus
- Zündmittel (60) umfasst, um einen Lichtbogen zwischen der ersten Elektrode und der zweiten Elektrode zu zünden.

9. Einrichtung nach Anspruch 8, **dadurch gekennzeichnet, dass** die Zündmittel
- eine Detektorschaltung (74, 174), die dazu dient, die Potentialdifferenz zwischen der ersten Elektrode und der zweiten Elektrode zu erkennen, sowie
- eine Zündschaltung umfassen, die dazu dient, einen Lichtbogen zwischen der feststehenden und der beweglichen Elektrode zu zünden, wenn die Potentialdifferenz zwischen der ersten und der zweiten Elektrode eine bestimmte Bedingung erfüllt.

10. Einrichtung nach Anspruch 9, **dadurch gekennzeichnet, dass** die Zündschaltung
- eine Zündelektrode (60, 160) zur Zündung eines Lichtbogens zwischen der ersten Elektrode und der zweiten Elektrode,
- sowie eine Schaltung (74, 174) zur Erzeugung einer Zündspannung zwischen der Zündelektrode und der ersten oder der zweiten Elektrode umfasst.

11. Einrichtung nach irgendeinem der vorhergehenden Ansprüche, **dadurch gekennzeichnet, dass** die Antriebsmittel Rückstellmittel (34) umfassen, um den beweglichen Träger von der Rückzugsstellung in die Ruhestellung zu verbringen.

12. Einrichtung nach Ansprüch 11, **dadurch gekennzeichnet, dass** die Rückstellmittel eine Rückholfeder (28) umfassen, um den beweglichen Träger in Richtung der Ruhestellung zu beaufschlagen.

13. Einrichtung nach irgendeinem der vorhergehenden Ansprüche, **dadurch gekennzeichnet, dass** sie darüber hinaus Anzeigemittel (34) zur Anzeige der Rückzugsstellung des beweglichen Trägers umfasst.

14. Einrichtung nach irgendeinem der vorhergehenden Ansprüche, **dadurch gekennzeichnet, dass** sie darüber hinaus
- ein Anschlussklemmenpaar zum Anschluss der Einrichtung an eine elektrische Leitung sowie an Erde umfasst, welches Anschlussklemmenpaar eine mit der ersten Elektrode dauerhaft elektrisch verbundene erste Anschlussklemme (14) sowie eine zweite Anschlussklemme (18) umfasst, die zumindest in der Ruhestellung des beweglichen Trägers elektrisch mit der zweiten Elektrode verbunden ist.

15. Einrichtung nach Anspruch 14, **dadurch gekennzeichnet, dass** die zweite Elektrode mit der zweiten Anschlussklemme dauerhaft elektrisch verbunden ist.

16. Einrichtung nach irgendeinem der vorhergehenden Ansprüche, **dadurch gekennzeichnet, dass** sie darüber hinaus
- eine feststehende dritte Elektrode (123A), die in einem festen Abstand zur ersten Elektrode zwischen der ersten Elektrode und der zweiten Elektrode angeordnet ist,
- sowie eine zwischen der dritten Elektrode und der zweiten Elektrode angeordnete vierte, feststehende Elektrode (123B) umfasst, wobei die vierte Elektrode dauerhaft elektrisch mit der dritten Elektrode verbunden ist, die zweite Elektrode in der Ruhestellung in Kontakt mit der vierten Elektrode steht, die zweite Elektrode in der Rückzugsstellung von der vierten Elektrode getrennt ist und die Lichtbogenlöschkammer Mittel (158) zur Abführung der Energie umfasst, die durch einen zwischen der dritten Elektrode und der ersten Elektrode gezogenen Lichtbogen erzeugt wird.

17. Einrichtung nach irgendeinem der Ansprüche 1 bis 13, **dadurch gekennzeichnet, dass** sie darüber hinaus
- eine dritte Elektrode (16),
- eine mit dem beweglichen Träger fest verbundene und mit der zweiten Elektrode (22) dauerhaft elektrisch verbundene vierte Elektrode (24), welche vierte Elektrode in der Ruhestellung des beweglichen Trägers mit der dritten Elektrode in Kontakt steht und in der Rückzugsstellung des beweglichen Trägers von der dritten Elektrode zurückgezogen in einer Trennstellung steht,
- sowie eine zweite Lichtbogenlöschkammer (56) mit Mitteln (58) zur Ableitung der Energie umfasst, die durch einen zwischen der dritten Elektrode und der vierten Elektrode gezogenen Lichtbogen erzeugt wird.

18. Einrichtung nach irgendeinem der Ansprüche 1 bis 13, **dadurch gekennzeichnet, dass** sie darüber hinaus
- ein Anschlussklemmenpaar zum Anschluss der Einrichtung an eine elektrische Leitung sowie an Erde, welches Anschlussklemmenpaar eine mit der ersten, feststehenden Elektrode (12) dauerhaft elektrisch verbundene erste Anschlussklemme (14) sowie eine zweite Anschlussklemme (18) umfasst, die zumindest in der Ruhestellung des beweglichen Trägers (20) elektrisch mit der zweiten Elektrode (22) verbunden ist.
- eine feststehende und mit der zweiten Anschlussklemme (18) dauerhaft elektrisch verbundene dritte Elektrode (16),
- eine mit dem beweglichen Träger fest verbundene und mit der zweiten Elektrode dauerhaft elektrisch verbundene vierte Elektrode (24), welche vierte Elektrode in der Ruhestellung des beweglichen Trägers mit der dritten Elektrode in Kontakt steht und in der Rückzugsstellung des beweglichen Trägers von der dritten Elektrode zurückgezogen in einer Trennstellung steht,
- sowie eine zweite Lichtbogenlöschkammer (56) mit Mitteln (58) zur Abführung der Energie umfasst, die durch einen zwischen der dritten Elektrode und der vierten Elektrode gezogenen Lichtbogen erzeugt wird.
